# EUROPEAN PATENT APPLICATION

(11) **EP 4 624 717 A1**
(43) Date of publication of application: **01.10.2025**
(21) Application number: 24166836.7
(22) Date of filing: 27.03.2024
(51) Int. Cl.: E05F 15/53

(54) **VEHICLE AND ARRANGEMENT FOR A HATCH**

(71) Applicant: Scania CV AB, 151 87 Södertälje (SE)
(72) Inventor: LARSSON, David, 619 32 Trosa (SE); ANDERSSON, Adam, 153 38 Järna (SE)
(74) Representative: Scania CV AB

(57) **Abstract**

The disclosure concerns an arrangement (2) for a hatch (12). The arrangement (2) comprising a first hydraulic cylinder (4) configured for actuation by a cab door (34), a second hydraulic cylinder (6), and a locking mechanism (8). A first end portion (14) of the second hydraulic cylinder (6) is connected to the hatch (12) and a second end portion (16) of the second hydraulic cylinder (6) is configured to be connected to a fixed structure (11). Actuation of the second hydraulic cylinder (6) causes opening and closing of the hatch. The locking mechanism (8) is arranged at the second end portion (16) and is configured to lock the hatch (12) in a locked state and to unlock the hatch in an unlocked state. The locking mechanism (8) is moveable between the locked state and the unlocked state in response to the actuation of the second hydraulic cylinder (6).

## Description

### TECHNICAL FIELD

The technology relates to the field of vehicles and to an arrangement for a hatch configured to cover a recessed area of a cab of a vehicle.

### BACKGROUND

The present invention relates generally to the field of vehicle security and aerodynamics, and more specifically to an arrangement for controlling a hatch or covering element for a recessed area of a vehicle cab, which may be provided e.g., in connection with a boarding step.

In the prior art, various systems have been developed to control the opening and closing of a hatch or covering element for a recessed area of a vehicle cab, such as a recessed area in connection with a boarding step. These systems are designed to improve the aerodynamic properties of the vehicle and prevent unauthorized access to the cab when the hatch is in its closed position. One such system is disclosed in DE102016005891A1, which describes a foldable footstep with a covering hatch/lid for a vehicle cab. The system includes a first and a second hydraulic cylinder, with the first hydraulic cylinder being mechanically connected to and controlled by the cab door, and the second hydraulic cylinder being mechanically connected to the foldable footstep and the hatch/lid. The first and second hydraulic cylinders communicate hydraulically with each other such that when the cab door is manually opened, the hatch/lid is opened and the foldable footstep is automatically unfolded to a use position substantially simultaneously.

Another prior art system is disclosed in WO2007/123447, which describes an access system for a vehicle comprising a pivotable door mountable in the body of the vehicle and a pivotable cover mountable in the chassis of the vehicle for covering at least one step adjacent to the door. The system further comprises a means for sensing the position of the door relative to its pivot axis, a member for automatically pivoting the cover around its pivot axis, and a means for transmitting a signal emitted from the door sensing means to the cover pivoting member so as to position the cover relative to its pivot axis as a function of the sensed position of the door.

However, there are several problems associated with the prior art systems of DE102016005891A1 and WO2007/123447. One problem is that the hydraulic cylinder, which is responsible for controlling the hatch, may not be strong enough to keep the hatch securely closed during driving. This can result in the hatch moving from its closed position due to vibrations or other forces, compromising its intended function and leading to insufficient hatch security. Another problem is the lack of a specific anti-theft mechanism to prevent unauthorized access to the cab door by manually forcing the hatch open, making the hatch less effective as a robbery protection measure. Additionally, if the hatch is not securely closed, it may create gaps or openings that negatively impact the vehicle's aerodynamic properties, leading to increased vehicle fuel consumption and reduced performance.

Furthermore, some prior art systems, such as the one disclosed in WO2007/123447, require a sensor for sensing the position of the door relative to its pivot axis, which makes the system complex.

### SUMMARY

It would be advantageous to achieve an improved arrangement for controlling a hatch or covering element for a recessed area of a vehicle cab that addresses the aforementioned problems of DE102016005891A1 and WO2007/123447 and provides a reliable solution. In particular, it would be desirable to enable a secure positioning of the hatch in its closed position. To better address one or more of these concerns, one or more of an arrangement for a hatch and a vehicle having the features defined in one or more of the independent claims is provided.

According to an aspect there is provided, an arrangement for a hatch configured to cover a recessed area of a cab of a vehicle. The arrangement comprises a first hydraulic cylinder configured for actuation by a cab door of the vehicle, a second hydraulic cylinder arranged in fluid communication with the first hydraulic cylinder such that the actuation of the first hydraulic cylinder causes an actuation of the second hydraulic cylinder, and a locking mechanism. A first end portion of the second hydraulic cylinder is configured to be connected to the hatch and a second end portion of the second hydraulic cylinder is configured to be connected to a fixed structure of the vehicle, such that the actuation of the second hydraulic cylinder causes opening and closing of the hatch. The locking mechanism is arranged at the second end portion of the second hydraulic cylinder and is configured to lock the hatch in a locked state and to unlock the hatch in an unlocked state. The locking mechanism is moveable between the locked state and the unlocked state in response to the actuation of the second hydraulic cylinder.

Since the locking mechanism is configured to lock the hatch in the locked state and to unlock the hatch in the unlocked state and since the locking mechanism is moveable between the locked state and the unlocked state in response to the actuation of the second hydraulic cylinder - the arrangement provides a secure and reliable way of locking and unlocking the hatch, ensuring a secure positioning of the hatch in its closed position. Thus, during use in a vehicle, road induced vibrations will not cause the hatch to accidentally open. Also, in examples where the hatch is arranged to cover a boarding step of the cab, which boarding step is associated with the recessed area, forced manual opening of the hatch is prevented and reduces misuse of the boarding step during attempted robbery.

Further, since the second hydraulic cylinder is utilised for the locking and unlocking of the hatch, such locking and unlocking is achieved in an uncomplicated manner. Namely, the actuation of the second hydraulic cylinder causing the locking and unlocking of the locking mechanism entails that no separate control arrangement of the locking mechanism needs to be provided.

Further advantages with the arrangement and the ability to lock the hatch utilising the locking mechanism may include one or more of:
- A reduced risk of excessive stress or wear on the second hydraulic cylinder. This helps to maintain the proper functioning of the hydraulic system including the first and second hydraulic cylinders and prolongs its lifespan.
- In use in a vehicle, the arrangement and the locking mechanism ensures that the hatch is securely closed, eliminating gaps or openings that could negatively impact the vehicle's aerodynamic properties. This leads to reduced fuel consumption and improved performance, making the vehicle more efficient.

According to a further aspect there is provided, a vehicle comprising a cab. The cab comprises a cab door, a recessed area arranged in connection with the cab door, a hatch pivotably connected to the cab and pivotable between a closed position, in which the recessed area of the cab is covered by the hatch and an open position, in which the recessed area of the cab is accessible, and an arrangement according to any one of aspects and/or examples discussed herein.

Since the vehicle comprises the arrangement for the hatch configured to cover the recessed area of the cab, as discussed above, a secure and reliable way of locking and unlocking the hatch, ensuring a secure positioning of the hatch in its closed position is provided. Accordingly, road induced vibrations are prevented from causing the hatch to accidentally open, forced manual opening of the hatch is prevented reducing misuse of the recessed area during attempted robbery, a reduced risk of excessive stress or wear on the second hydraulic cylinder is provided, and unnecessary large gaps that could negatively impact the vehicle's aerodynamic properties are eliminated.

The cab of the vehicle may provide a driver's position including a seat for the driver and a steering wheel.

The recessed area may be recessed for facilitating personnel, such as a driver, and/or passengers access to the cab. The recessed area may be arranged in connection with the cab door at a driver side of the cab. The recessed area may be arranged in connection with the cab door at a passenger side of the cab. The recessed area may be arranged in connection with a boarding step for personnel to step on when entering or exiting the vehicle. For instance, the recessed area may extend at least above the boarding step to enable stepping on the boarding step.

The hatch forms a cover i.e., the hatch may have a continuous outer surface which conceals the recessed area when the hatch is in a closed position. The continuous outer surface may be smooth and follow a general outer contour of the cab outside the recessed area.

Accordingly, in the closed position of the hatch, the recessed area is covered, and the hatch prevents access to the recessed area. Also, in the closed position, the hatch provides a guiding function for an airstream passing an outside of the cab as the vehicle is in motion. Thus, reducing drag (air resistance) of the cab in comparison with if the recessed area would not be covered. In an open position of the hatch, the recessed area is accessible from an outside of the cab.

The first and second hydraulic cylinders form part of a hydraulic system that is configured for opening and closing the hatch. The fluid communication between the first and second hydraulic cylinder is configured such that the hydraulic pressure produced in the first hydraulic cylinder when the cab door is opened actuates the second hydraulic cylinder to open the hatch. The hydraulic pressure produced in the first hydraulic cylinder when the cab door is closed actuates the second hydraulic cylinder to close the hatch.

The first end portion of the second hydraulic cylinder may be connected to the hatch via a lever. A pivot axis of the hatch is arranged in relation to the hatch and the lever, such that extension and retraction of the second hydraulic cylinder pivots the hatch about the pivot axis to its closed and open positions.

The fixed structure of the vehicle to which the second end portion of the second hydraulic cylinder is configured to be connected, may be a structure that is fixed in relation to the cab, such as fixed structure of the cab e.g. a frame of the cab. The hatch is moveable in relation to the fixed structure.

In the locked state of the locking mechanism, the hatch is prevented from pivoting about its pivot axis and fixed in relation to the cab. In the unlocked state of the locking mechanism, the hatch is pivotable about the pivot axis by the second hydraulic cylinder.

The locking mechanism may interact with a member, such as an engagement member, provided at an inside of the hatch to secure the hatch in the locked state of the locking mechanism and to release the hatch in the unlocked state of the locking mechanism. The engagement member may be connected to the inside of the hatch, such as to an inner surface of the hatch or a structure arranged at the inside of the hatch, which structure is configured for supporting the engagement member.

In this context, an inside of the hatch is a side of the hatch which faces towards an interior of the cab and the vehicle when the hatch is in its closed position. The inside of the hatch is an opposing side of an outside of the hatch, the outside facing towards an ambient environment of the cab and the vehicle when the hatch is in its closed position.

In the closed position of the hatch and the locked position of the locking mechanism, the locking mechanism is moveable to its unlocked state in response to the second hydraulic cylinder being actuated. That is, an initial portion of a hatch opening movement of second hydraulic cylinder moves the locking mechanism into the unlocked state. The continued opening movement of the second hydraulic cylinder thereafter opens the hatch. Conversely, in the closed position of the hatch and the unlocked position of the locking mechanism, i.e. at an end portion of a hatch closing movement of second hydraulic cylinder, the locking mechanism is moveable to its locked state in response to the second hydraulic cylinder being further actuated. That is, a final portion of the hatch closing movement of the second hydraulic cylinder moves the locking mechanism into the locked state.

Optionally in some examples, the arrangement comprises a connection element configured for connection of the second end portion of the second hydraulic cylinder to the fixed structure of the vehicle. The connection element is configured to provide a limited moveability of the second end portion of the second hydraulic cylinder in relation to the fixed structure of the vehicle. The limited moveability of the second end portion of the second hydraulic cylinder enables switching between the locked state and the unlocked state. In this manner, the connection element enables utilising of the second hydraulic cylinder actuation to switch between the locked and unlocked states of the locking mechanism.

The limited moveability of the second end portion of the second hydraulic cylinder may be provided by the connection element enabling e.g., a pivoting, a swinging, and/or a sliding motion of the second end portion of the second hydraulic cylinder in relation to the fixed structure of the vehicle.

Further features of, and advantages with, the invention will become apparent when studying the appended claims and the following detailed description.

### BRIEF DESCRIPTION OF THE DRAWINGS

Various aspects and/or examples of the invention, including its particular features and advantages, will be readily understood from the examples discussed in the following detailed description and the accompanying drawings, in which:
Fig. 1 illustrates a portion of a vehicle,
Fig. 2 schematically illustrates a cab of a vehicle including a cab door and an arrangement for a hatch,
Figs. 3a and 3b schematically illustrate an example of an arrangement for a hatch, and
Figs. 4a to 4d show different detailed views of an example of an arrangement for a hatch.

### DETAILED DESCRIPTION

Aspects and/or examples of the invention will now be described more fully. Like numbers refer to like elements throughout. Well-known functions or constructions will not necessarily be described in detail for brevity and/or clarity.

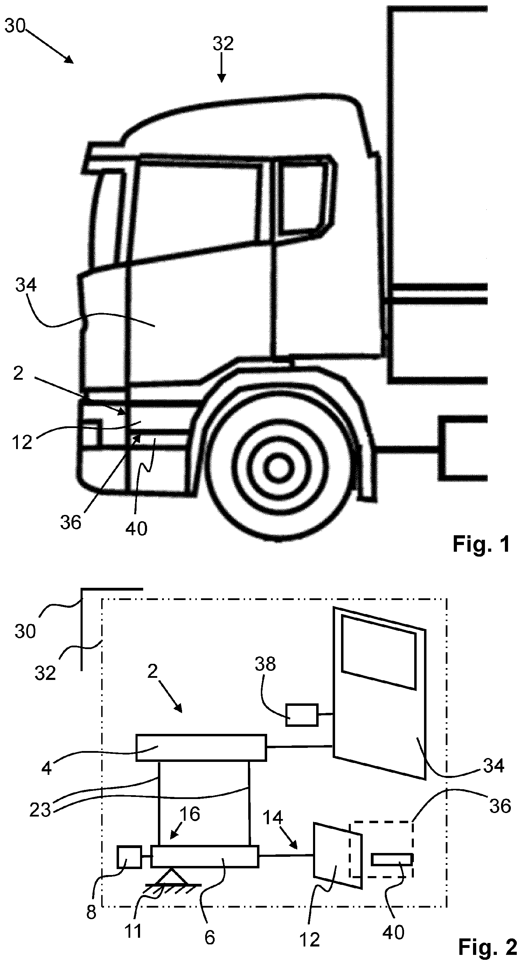

**Fig. 1** illustrates a front end of a vehicle 30 according to embodiments.

The vehicle 30 may be any kind of vehicle configured for land-based propulsion, such as e.g., a bus, a truck, a heavy truck, a car, or a train. In **Fig. 1****,** the vehicle 30 is illustrated as a heavy load vehicle in the form of a truck.

**Fig. 1** illustrates a portion of the vehicle 30, which includes an arrangement 2 for a hatch 12. The arrangement 2 is one according to aspects and/or examples discussed herein and is designed to control the operation of the hatch 12. Examples of the arrangement 2 are further discussed below with reference to **Figs. 2** - **4d****.**

The vehicle 30 includes a cab 32 with a cab door 34. The cab 32 is designed to accommodate passengers and/or operators of the vehicle 30. The cab door 34 is designed to provide access to the interior of the cab 32. The cab 32 includes a recessed area 36 arranged in connection with the cab door 34.

The hatch 12 is pivotably connected to the cab 32 and pivotable between a closed position, in which the recessed area 36 of the cab 32 is covered by the hatch 12 and an open position, in which the recessed area 36 of the cab 36 is accessible.

In **Fig. 1****,** the recessed area 36 is not visible since it is covered by the hatch 12, which is shown in its closed position.

In some examples, such as the illustrated example, the recessed area 36 of the cab 32 is configured to accommodate a boarding step 40 for facilitating entry into the cab 32, and the hatch 12 is configured to cover the recessed area 36 and the boarding step 40 when in its closed position.

The boarding step 40 is designed to facilitate entry into the cab 32 by providing a step for passengers and/or operators to step on when entering the cab 32. The boarding step 40 is arranged in relation to the recessed area 36 such that when the hatch 12 is in its closed position the boarding step 40 is not accessible, and such that it is accessible when the hatch 12 is in its open position.

In the example of **Fig. 1****,** the boarding step 40 is arranged at a lower portion of the recessed area 36. Alternatively, the boarding step 40 may be arranged within the recessed area 36, such as at a vertical middle portion of the recessed area 36.

**Fig. 2** schematically illustrates a cab 32 of a vehicle 30 including a cab door 34 and an arrangement 2 for a hatch 12. The cab 32 may be a cab 32 for a vehicle 30 as discussed with reference to **Fig. 1****.** Accordingly, in the following reference is also made to **Fig. 1****.**

The arrangement 2 is connected to the cab door 34 and the hatch 12 and is actuated by the opening and closing of the cab door 34. The arrangement 2 includes a first hydraulic cylinder 4, a second hydraulic cylinder 6, and a locking mechanism 8.

The cab door 34 is designed to provide access to the interior of the cab 32. The cab door 34 is configured to actuate the first hydraulic cylinder 4 when it is opened and closed. The actuation of the first hydraulic cylinder 4 causes an actuation of the second hydraulic cylinder 6, which in turn controls the opening, closing, and locking of the hatch 12.

The hatch 12 is a movable cover designed to cover a recessed area 36 of the cab 32. The hatch 12 is, e.g. pivotably connected to the cab 32 and can be moved between a closed position, in which the recessed area 36 is covered, and an open position, in which the recessed area 36 is accessible. The hatch 12 is actuated by the second hydraulic cylinder 6, which is connected to the hatch 12 at a first end portion 14 of the second hydraulic cylinder 6.

The cab door 34 is mechanically connected to the first hydraulic cylinder 4, enabling transfer of mechanical energy from the opening and closing of the cab door 34 to the actuation of the first hydraulic cylinder 4.

The first hydraulic cylinder 4 is actuated by opening and closing the cab door 34, and the actuation of the first hydraulic cylinder 4 causes the actuation of the second hydraulic cylinder 6, which in turn causes the opening and closing of the hatch 12 and the locking and unlocking of the locking mechanism 8.

For instance, opening the cab door 34 will retract the first hydraulic cylinder 4 and build up a hydraulic pressure, which is communicated to the second hydraulic cylinder 6 for it to retract. Conversely, closing the cab door 34 will extend the first hydraulic cylinder 4 and build up a hydraulic pressure, which is communicated to the second hydraulic cylinder 6 for it to extend. In alternative configurations of the arrangement 2, the opening and closing of the cab door 34 causes other functional constellations of extension and retraction of the first and/or second hydraulic cylinders 4, 6.

In **Fig. 2** the cab door 34 is open and the hatch 12 is shown in its open position providing access to the recessed area 36 and a boarding step 40 arranged in connection therewith.

The second hydraulic cylinder 6 is arranged in fluid communication with the first hydraulic cylinder 4. The second hydraulic cylinder 6 is designed to be actuated by the hydraulic fluid pressure provided by the first hydraulic cylinder 4. The second hydraulic cylinder 6 includes a first end portion 14, which is configured to be connected to the hatch 12, and a second end portion 16, which is configured to be connected to a fixed structure 11 of the vehicle 30. The locking mechanism 8 is arranged at the second end portion 16 of the second hydraulic cylinder 6.

The fluid communication between the second and first hydraulic cylinders 6, 4 is enabled via hydraulic conduits 23. Not shown, but there may be provided further hydraulic components such as further conduits one or more check valves, a hydraulic fluid tank, etc.

The cab door 34 may be manually opened and closed. Accordingly, the manual opening and closing of the cab door 34 may actuate the first hydraulic cylinder 4.

Optionally in some examples, such as the illustrated example, the vehicle 30 comprises a cab door actuator 38 configured to at least assist in opening and/or closing the cab door 34. The cab door actuator 38 is operable independently of the arrangement 2. This feature provides additional convenience to the user intending to open and/or close the cab door 34.

As such, cab door actuators are known. However, in the context of the present arrangement 2 and vehicle 30, the cab door actuator 38 provides an additional advantage in that the actuation of the first hydraulic cylinder 4 will be assisted and need at least not rely entirely upon manual opening and closing of the cab door 34. Accordingly, also the actuation of the second hydraulic cylinder 6 and operation of the locking mechanism 8 may be assisted by the cab door actuator 38.

The actuation of the second hydraulic cylinder 6 causes the opening and closing of the hatch 12, and the locking and unlocking of the locking mechanism 8.

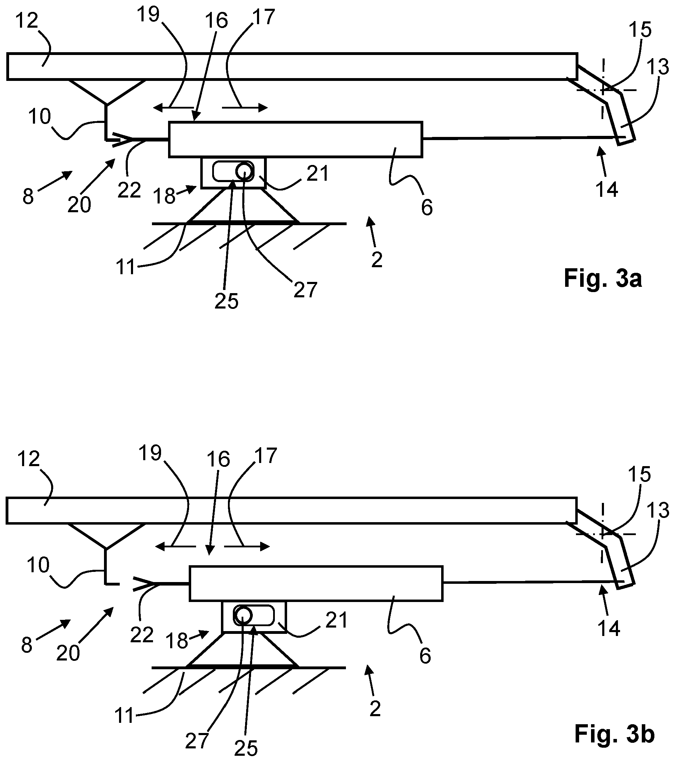

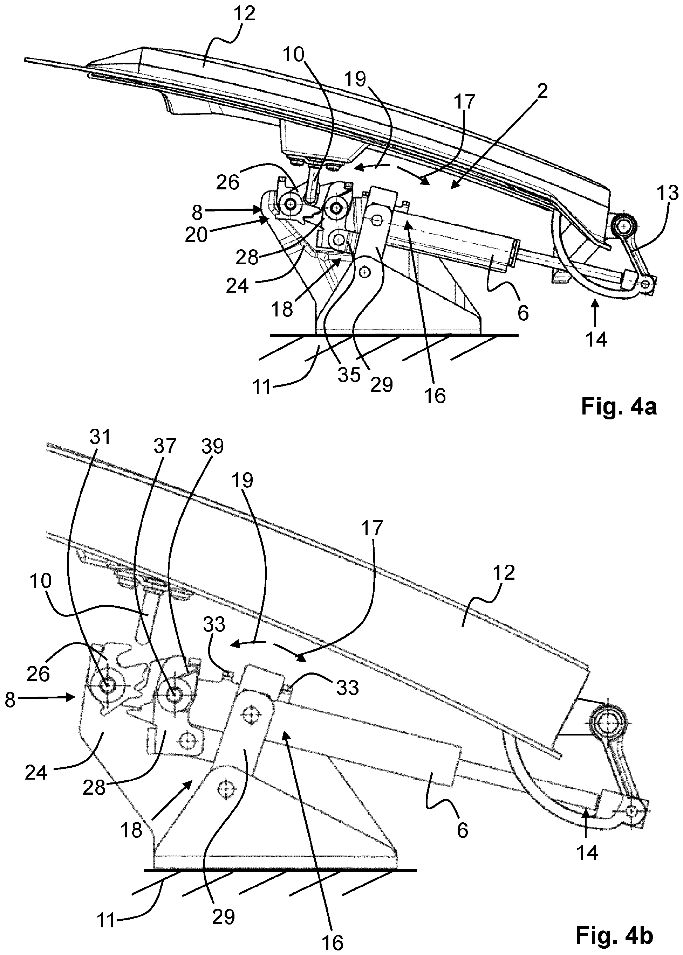

The locking mechanism 8 is configured to lock the hatch 12 in a locked state and to unlock the hatch 12 in an unlocked state. The locking and unlocking of the locking mechanism 8 is discussed in further detail below with reference to the example of **Figs. 3a and 3b** and the example of **Figs. 4a - 4d****.**

**Figs. 3a and 3b** schematically illustrate an example of an arrangement 2 for a hatch 12 with its locking mechanism 8 in a locked state and an unlocked state. **Figs. 3a and 3b** show a portion of the arrangement 2 and hatch 12 in a top view.

The arrangement 2 may be an arrangement 2 as discussed above with reference to **Figs. 1 and 2****.** Accordingly, reference is also made to the above discussion of the **Figs. 1 and 2** examples.

Again, the arrangement 2 comprises a first hydraulic cylinder (not shown), a second hydraulic cylinder 6 arranged in fluid communication with the first hydraulic cylinder such that the actuation of the first hydraulic cylinder causes an actuation of the second hydraulic cylinder 6, and a locking mechanism 8. A first end portion 14 of the second hydraulic cylinder 6 is configured to be connected to the hatch 12 and a second end portion 16 of the second hydraulic cylinder 6 is configured to be connected to a fixed structure 11 of the relevant vehicle. The locking mechanism 8 is arranged at the second end portion 16 of the second hydraulic cylinder 6 and is configured to lock the hatch 12 in a locked state when the hatch 12 is in its closed position and to unlock the hatch 12 in an unlocked state, which enables the opening of the hatch 12.

In **Fig. 3a** the locking mechanism 8 is shown in the locked state and in **Fig. 3b** the locking mechanism 8 is shown in the unlocked state.

Actuation of the second hydraulic cylinder 6 causes opening and closing of the hatch 12. Since the second end portion 16 of the second hydraulic cylinder 6 is connected to the fixed structure 11 and the first end portion 14 is connected to the hatch 12, via a lever 13, the hatch 12 is pivoted about a pivot axis 15 of the hatch 12 by the second hydraulic cylinder 6. Accordingly, in the illustrated example, a retraction of the second hydraulic cylinder 6 opens the hatch 12 and an extension of the second hydraulic cylinder 6 closes the hatch 12.

Thus, according to some examples, such as the illustrated example, the hatch 12 is configured to be actuated by the second hydraulic cylinder 6 through a lever 13 connected to the hatch 12 and the first end portion 14 of the second hydraulic cylinder 6.

The lever 13 is designed to transfer mechanical energy from the actuation of the second hydraulic cylinder 6 to the operation of the hatch 12. The lever 13 enables the opening and closing of the hatch 12 in response to the actuation of the second hydraulic cylinder 6 by pivoting the hatch 12 about the pivot axis 15.

The fixed structure 11 of the vehicle provides a stable base for the operation of the second hydraulic cylinder 6 and the locking mechanism 8. The fixed structure 11 is designed to be connected to the second end portion 16 of the second hydraulic cylinder 6, enabling the transfer of mechanical energy from the actuation of the second hydraulic cylinder 6 to the operation of the locking mechanism 8.

The locking mechanism 8 is moveable between the locked state and the unlocked state in response to actuation of the second hydraulic cylinder 6.

The arrangement 2 comprises a connection element 18 configured for connection of the second end portion 16 of the second hydraulic cylinder 6 to the fixed structure 11 of the vehicle. The connection element 18 is configured to provide a limited moveability of the second end portion 16 of the second hydraulic cylinder 6 in relation to the fixed structure 11 of the vehicle.

The limited moveability of the second end portion 16 of the second hydraulic cylinder 6 enables switching between the locked state and the unlocked state of the locking mechanism 8. The connection element 18 is mechanically connected to the second end portion 16 of the second hydraulic cylinder 6 and the fixed structure 11 of the vehicle 30, enabling the transfer of mechanical energy from the actuation of the second hydraulic cylinder 6 to the operation of the locking mechanism 8.

The limited moveability of the second end portion 16 of the second hydraulic cylinder 6 enables movement of the second end portion 16 in a first direction 17, which causes the locking mechanism 8 to switch to its unlocked state and in a second direction 19, which causes the locking mechanism 8 to switch to its locked state. The second direction 19 is opposite to the first direction 17. Thus, the locking mechanism 8 is operable in an uncomplicated an efficient manner.

In the illustrated example of **Figs. 3a and 3b****,** the connection element 18 includes a member 21 that is connected to the second hydraulic cylinder 6 and a pin 27 connected to the fixed structure 11. The member 21 and is provided with a slot 25 which extends substantially in parallel with the second hydraulic cylinder 6. The pin 27 extends through the slot 25.

The slot 25 as a length that provides the limited moveability of the second hydraulic cylinder 6 in the first and second directions 17, 19 enabling the member 21 and the second hydraulic cylinder 6 to slide along the pin 27. The slot 25 has a length sufficiently long for the locking mechanism 8 to move between the locked and unlocked states.

In **Fig. 3a** the locking mechanism 8 is in its locked state and actuation/retraction of the second hydraulic cylinder 6 will cause the second end portion 16 of the second hydraulic cylinder 6 to move in the first direction 17 as the pin 27 connected to the fixed structure 11 slides along the slot 25 from one end portion thereof to its opposite end portion. Since at the start of the actuation, the locking mechanism 8 is in its locked state, the hatch 12 is not opened until the range of the limited moveability of the second end portion 16 in the first direction 17 has been exhausted and the locking mechanism 8 is in its unlocked state as shown in **Fig. 3b****.**

From an open position of the hatch 12, it is closed by actuation/extension of the second hydraulic cylinder 6. When the hatch 12 has been closed, as shown in **Fig. 3b****,** the final portion of the actuation/extension of the second hydraulic cylinder 6 cause the second end portion 16 of the second hydraulic cylinder 6 to move in the second direction 19. The pin 27 slides along the slot 25 and enables the locking mechanism 8 to enter its locked state, as shown in **Fig. 3a****.** A certain resistance may be provided between the pin 27 and the slot 25 in order to ensure that first the hatch 12 is closed and first thereafter the limited movability of the second end portion 16 of the second hydraulic cylinder 6 in relation to the fixed structure 11 is made possible.

Optionally in some examples, such as the illustrated example, the arrangement 2 comprises an engagement member 10 configured to be arranged at an inside of the hatch 12. The engagement member 10 is configured to protrude from the hatch 12 in a direction towards the locking mechanism 8. The locking mechanism 8 comprises a first portion 20 configured to engage with the engagement member 10 in the locked state of the locking mechanism 8. This feature ensures a secure engagement between the locking mechanism 8 and the hatch 12, providing a robust and reliable locking system of the hatch 12.

The first portion 20 of the locking mechanism 8 is mechanically connected to the second end portion 16 of the second hydraulic cylinder 6, enabling the transfer of mechanical energy from the actuation of the second hydraulic cylinder 6 to the operation of the locking mechanism 8.

Optionally in some examples, such as the illustrated example of **Figs. 3a and 3b****,** the first portion 20 of the locking mechanism 8 comprises a protruding element 22 extending from the second end portion 16 of the second hydraulic cylinder 6 towards the engagement member 10 and being configured to engage with the engagement member 10 in the locked state of the locking mechanism 8.

The protruding element 22 is mechanically connected to the second end portion 16 of the second hydraulic cylinder 6, enabling the transfer of mechanical energy from the actuation of the second hydraulic cylinder 6 to the operation of the locking mechanism 8.

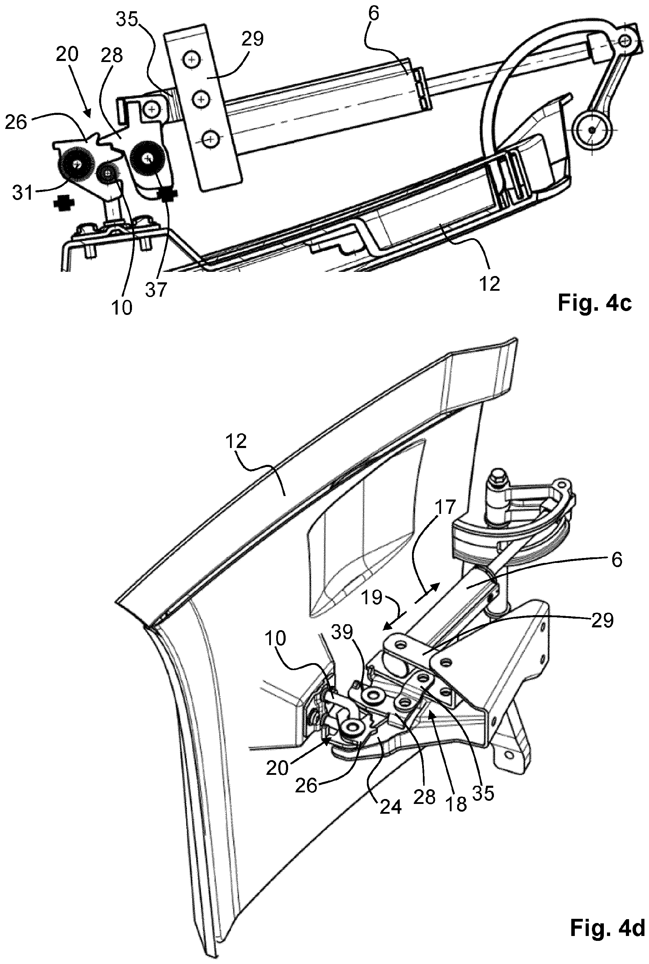

**Figs. 4a to 4d** show various detailed views of an example of an arrangement 2 for a hatch 12 with its locking mechanism 8 in a locked state and an unlocked state. **Figs. 4a and 4b** show top views of portions of the arrangement 2 and the hatch 12, **Fig. 4c** shows a bottom view of the arrangement 2 and the hatch 12, and **Fig. 4d** shows an isometric view of the arrangement 2 and the hatch 12. In **Figs. 4a****,** **4c, and 4d** the locking mechanism 8 is shown in the locked state and in **Fig. 4b** the locking mechanism 8 is shown in the unlocked state.

The arrangement 2 may be an arrangement 2 as discussed above with reference to **Figs. 1 and 2****.** Accordingly, reference is also made to the above discussion of the **Figs. 1 and 2** examples.

The arrangement 2 operates according to the same principles as discussed above in connection with the **Figs. 3a and 3b** embodiments. Accordingly, in the following mainly, the differing features will be discussed.

Again, the arrangement 2 comprises a first hydraulic cylinder (not shown), a second hydraulic cylinder 6 arranged in fluid communication with the first hydraulic cylinder such that the actuation of the first hydraulic cylinder causes an actuation of the second hydraulic cylinder 6, and a locking mechanism 8. A first end portion 14 of the second hydraulic cylinder 6 is configured to be connected to the hatch 12 and a second end portion 16 of the second hydraulic cylinder 6 is configured to be connected to a fixed structure 11 of the relevant vehicle. The locking mechanism 8 is arranged at the second end portion 16 of the second hydraulic cylinder 6 and is configured to lock the hatch 12 in a locked state when the hatch 12 is in its closed position and to unlock the hatch 12 in an unlocked state, which enables the opening of the hatch 12.

Again, actuation of the second hydraulic cylinder 6 causes opening and closing of the hatch 12. The second end portion 16 of the second hydraulic cylinder 6 is connected to the fixed structure 11 and the first end portion 14 is connected to the hatch 12 via a lever 13. Accordingly, again, the hatch 12 is configured to be actuated by the second hydraulic cylinder 6 through a lever 13 connected to the hatch 12 and the first end portion 14 of the second hydraulic cylinder 6.

Again, the locking mechanism 8 is moveable between the locked state and the unlocked state in response to actuation of the second hydraulic cylinder 6.

Again, the arrangement 2 comprises a connection element 18 configured for connection of the second end portion 16 of the second hydraulic cylinder 6 to the fixed structure 11 of the vehicle. The connection element 18 is configured to provide a limited moveability of the second end portion 16 of the second hydraulic cylinder 6 in relation to the fixed structure 11 of the vehicle. The limited moveability of the second end portion 16 of the second hydraulic cylinder 6 enables movement of the second end portion 16 in a first direction 17, which causes the locking mechanism 8 to switch to its unlocked state and in a second direction 19, which causes the locking mechanism 8 to switch to its locked state. The second direction 19 is opposite to the first direction 17.

In the example of **Figs. 4a to 4d****,** the connection element 18 includes a pivotable element 29 that is connected to the second end portion 16 of the second hydraulic cylinder 6 and to the fixed structure 11. The pivotable element 29 permits a limited pivotal moveability of the second end portion 16 of the second hydraulic cylinder 6 in the first and second directions 17, 19. The two end positions of this limited pivotal moveability are ensured by two end stops 33 for the pivotable element 29, see **Fig. 4b****.** The end stops 33 are arranged fixed in relation to the fixed structure 11.

In **Figs. 4a****,** **4c, and 4d** the locking mechanism 8 is in its locked state and actuation/retraction of the second hydraulic cylinder 6 will cause the second end portion 16 of the second hydraulic cylinder 6 to move in the first direction 17. Since at the start of the actuation, the locking mechanism 8 is in its locked state, the hatch 12 is not opened until the range of the limited moveability of the second end portion 16 in the first direction 17 has been exhausted and the locking mechanism 8 is in its unlocked state as shown in **Fig. 4b****,** at which point the hatch 12 starts to open and pivot towards its open position.

From an open position of the hatch 12, it is closed by actuation/extension of the second hydraulic cylinder 6. When the hatch 12 has reached its closed position i.e., a short pivotal motion of the hatch 12 from its position shown in **Fig. 4b****,** the final portion of the actuation/extension of the second hydraulic cylinder 6 causes the limited pivotal movement of the second end portion 16 of the second hydraulic cylinder 6 in the second direction 19 and enables the locking mechanism 8 to enter its locked state, as shown in **Figs. 4a****,** **4c, and 4d****.**

Again, the arrangement 2 comprises an engagement member 10 configured to be arranged at an inside of the hatch 12. The engagement member 10 is configured to protrude from the hatch 12 in a direction towards the locking mechanism 8.

The locking mechanism 8 comprises a first portion 20 configured to engage with the engagement member 10 in the locked state of the locking mechanism 8. The engagement member 10 releases from the first portion 20 of the locking mechanism 8 in the unlocked state of the locking mechanism 8, thereby allowing the hatch 12 to be moved from its closed position to its open position.

Optionally in some examples, such as the illustrated example, the engagement member 10 comprises a U-shaped bracket configured to extend from the hatch 12 towards the locking mechanism 8, see **Fig. 4d****.** In this manner, a secure engagement between the locking mechanism 8 and the hatch 12 may be provided in the locked state of the locking mechanism 8.

According to some examples, such as the example of **Figs. 4a to 4d****,** the first portion 20 of the locking mechanism 8 comprises a pivotable member 26 configured to engage with the engagement member 10 in the locked state of the locking mechanism 8 and to release the engagement member 10 in the unlocked state of the locking mechanism 8. In this manner, via the engagement of the engagement member 10 by the pivotable member 26 in the locked state, a reliable locking mechanism 8 may be provided.

According to some examples, such as the illustrated example of **Figs. 4a to 4d****,** the locking mechanism 8 comprises a second portion 24 configured to be fixedly connected to the fixed structure 11 of the vehicle. The pivotable member 26 is pivotably connected to the second portion 24.

Since, the pivotable member 26 is pivotably connected to the second portion 24 of the locking mechanism 8, the pivotable member 26 is enabled to pivot between a position where it engages with the engagement member 10 in the locked state and a position where it releases the engagement member 10 in the unlocked state.

According to some examples, such as the illustrated example, the first portion 20 of the locking mechanism 8 further comprises a locking member 28 configured to prevent the pivotable member 26 from pivoting in the locked state and to release the pivotable member 26 in the unlocked state. In this manner, a secure locking mechanism 8 may be provided, that ensures that in its locked state, the hatch 12 remains in its closed position.

According to some examples, such as the illustrated example, the locking member 28 is pivotably connected to the second portion 24.

According to some examples, such as the illustrated example, the locking member 28 is pivotable by the limited movement of the second end portion 16 of the second hydraulic cylinder 6 in the first direction 17 and/or in the second direction 19.

With reference to **Figs. 4a to 4d****,** the following functionality of the locking mechanism 8 may be provided: The pivotable member 26 is pivotable about a first axis 31. The first axis 31 is fixedly arranged at the second portion 24. The pivotable member 26 in an open pivotal position is shown in **Fig. 4b****.** As the second hydraulic cylinder 6 extends and moves the hatch 12 towards its closed position, the engagement member 10 pushes against the pivotable member 26 and pivots the pivotable member 26 into a closed pivotal position, as shown in **Figs. 4a****,** **4c, and 4d****.** Thus, the engagement member 10 is grasped by the pivotable member 26 for the locking mechanism 8 to hold it in its locked state. (In **Fig. 4c****,** the second member 24 is not shown to clearly show the pivotable member 26 and the locking member 28 in the bottom view.)

For instance, the engagement member 10 may be engaged between the first portion 20 and the second portion 24, such as between the pivotable member 26 of the first portion 20 and the second portion 24 in the locked state of the locking mechanism 8.

The locking member 28 is pivotable about a second axis 37. The locking member 28 is pivoted into a release position, as shown in **Fig. 4b****,** when the second end portion 16 of the second hydraulic cylinder 6 is moved in the first direction 17. More specifically, the locking member 28 is connected to the pivotable element 29 of the connection member 18 via a link element 35 such that when the second end portion 16 of the second hydraulic cylinder 6 is moved in the first direction 17 the link element 35 pivots the locking member 28 to the release position. The link element 35 may comprise one or more separate members.

The locking member 28 is shown in a locking position in **Figs. 4a****,** **4c, and 4d****.** In its locking position, the locking member 28 prevents the pivotable member 26 from pivoting about the first axis 31. In the locking position, the locking member 28 engages with the pivotable member 26. When closing the hatch 12, as the second hydraulic cylinder 6 extends and the engagement member 10 pushes against the pivotable member 26, the second end portion 16 of the second hydraulic cylinder 6 is moved in the second direction 19, which enables the locking member 28 to take its locking position.

The locking member 28 may be biased by a torsional spring 39 towards the locking position. This may ensure that the locking member 28 pivots to, and/or remains in, its locking position when the locking mechanism 8 is in the locked state.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the foregoing is illustrative of various examples and that the invention is defined only by the appended claims. A person skilled in the art will realize that the examples may be modified, and that different features of the examples may be combined to create examples other than those described herein, without departing from the scope of the invention, as defined by the appended claims.

## Claims

1. An arrangement (2) for a hatch (12) configured to cover a recessed area (36) of a cab (32) of a vehicle (30), the arrangement (2) comprising a first hydraulic cylinder (4) configured for actuation by a cab door (34) of the vehicle (30), a second hydraulic cylinder (6) arranged in fluid communication with the first hydraulic cylinder (4) such that the actuation of the first hydraulic cylinder (4) causes an actuation of the second hydraulic cylinder (6), and a locking mechanism (8), wherein
a first end portion (14) of the second hydraulic cylinder (6) is configured to be connected to the hatch (12) and a second end portion (16) of the second hydraulic cylinder (6) is configured to be connected to a fixed structure (11) of the vehicle (30), such that the actuation of the second hydraulic cylinder (6) causes opening and closing of the hatch (12), wherein
the locking mechanism (8) is arranged at the second end portion (16) of the second hydraulic cylinder (6) and is configured to lock the hatch (12) in a locked state and to unlock the hatch (12) in an unlocked state, and wherein
the locking mechanism (8) is moveable between the locked state and the unlocked state in response to the actuation of the second hydraulic cylinder (6).

2. The arrangement (2) according to claim 1, comprising a connection element (18) configured for connection of the second end portion (16) of the second hydraulic cylinder (6) to the fixed structure (11) of the vehicle (30), wherein
the connection element (18) is configured to provide a limited moveability of the second end portion (16) of the second hydraulic cylinder (6) in relation to the fixed structure (11) of the vehicle (30), and wherein
the limited moveability of the second end portion (16) of the second hydraulic cylinder (6) enables switching between the locked state and the unlocked state.

3. The arrangement (2) according to claim 2, wherein the limited moveability of the second end portion (16) of the second hydraulic cylinder (6) enables movement of the second end portion (16) in a first direction (17) which causes the locking mechanism (8) to switch to its unlocked state and in a second direction (19) which causes the locking mechanism (8) to switch to its locked state, and wherein the second direction (19) is opposite to the first direction (17).

4. The arrangement (2) according to any one of claims 1 to 3, comprising an engagement member (10) configured to be arranged at an inside of the hatch (12), wherein the engagement member (10) is configured to protrude from the hatch (12) in a direction towards the locking mechanism (8), and wherein the locking mechanism (8) comprises a first portion (20) configured to engage with the engagement member (10) in the locked state of the locking mechanism (8).

5. The arrangement (2) according to claim 4, wherein the first portion (20) of the locking mechanism (8) comprises a protruding element (22) extending from the second end portion (16) of the second hydraulic cylinder (6) towards the engagement member (10) and being configured to engage with the engagement member (10) in the locked state of the locking mechanism (8).

6. The arrangement (2) according to claim 4, wherein the first portion (20) of the locking mechanism (8) comprises a pivotable member (26) configured to engage with the engagement member (10) in the locked state of the locking mechanism (8) and to release the engagement member (10) in the unlocked state of the locking mechanism (8).

7. The arrangement (2) according to claim 6, wherein the first portion (20) of the locking mechanism (8) further comprises a locking member (28) configured to prevent the pivotable member (26) from pivoting in the locked state and to release the pivotable member (26) in the unlocked state.

8. The arrangement (2) according to claims 3 and 7, wherein the locking member (28) is pivotable by the limited movement of the second end portion (16) of the second hydraulic cylinder (6) in the first direction (17) and/or in the second direction (19).

9. The arrangement (2) according to any one of claims 6 to 8, wherein the locking mechanism (8) comprises a second portion (24) configured to be fixedly connected to the fixed structure (11) of the vehicle (30), and wherein the pivotable member (26) is pivotably connected to the second portion (24).

10. The arrangement (2) according to claims 7 and 9, wherein the locking member (28) is pivotably connected to the second portion (24).

11. A vehicle (30) comprising a cab (32), wherein the cab (32) comprises a cab door (34), a recessed area (36) arranged in connection with the cab door (34), a hatch (12) pivotably connected to the cab (32) and pivotable between a closed position, in which the recessed area (36) of the cab (32) is covered by the hatch (12), and an open position, in which the recessed area (36) of the cab (32) is accessible, and an arrangement (2) according to any one of claims 1 to 10.

12. The vehicle (30) according to claim 11, wherein the hatch (12) is configured to be actuated by the second hydraulic cylinder (6) through a lever (13) connected to the hatch (12) and the first end portion (14) of the second hydraulic cylinder (6).

13. The vehicle (30) according to claim 12, wherein the first hydraulic cylinder (4) is actuated by opening and closing the cab door (34), and wherein the actuation of the first hydraulic cylinder (4) causes the actuation of the second hydraulic cylinder (6), which in turn causes the opening and closing of the hatch (12) and the locking and unlocking of the locking mechanism (8).

14. The vehicle (30) according to any one of claims 11 to 13, comprising a cab door actuator (38) configured to at least assist in opening and/or closing the cab door (34), wherein the cab door actuator (38) is operable independently of the arrangement (2).

15. The vehicle (30) according to any one of claims 11 to 14, wherein the recessed area (36) of the cab (32) is configured to accommodate a boarding step (40) for facilitating entry into the cab (32), and wherein the hatch (12) is configured to cover the recessed area (36) and the boarding step (40) when in its closed position.
